# FASCICULE DE BREVET EUROPEEN

(11) **EP 0 688 080 B1**
(45) Date de publication et mention de la délivrance du brevet: **15.09.1999**
(21) Numéro de dépôt: 95410055.8
(22) Date de dépôt: 07.06.1995
(51) Int. Cl.: H02J 3/14

(54) **Dispositif de gestion de puissance électrique d'une installation**
Verwaltungsvorrichtung für elektrische Energieverteilungsanlage
Energy management device for an electrical installation

(30) Priorité: 16.06.1994 FR 9407510
(43) Date de publication de la demande: 20.12.1995
(73) Titulaire: Schneider Electric Industries SA, 92100 Boulogne Billancourt (FR)
(72) Inventeur: Gilot, Alain, F-38050 Grenoble Cedex 09 (FR)
(74) Mandataire: Jouvray, Marie-Andrée

(56) Documents cités:
- EP-A- 0 163 915
- EP-A- 0 372 961
- EP-A- 0 538 078
- EP-A- 0 597 322
- US-A- 4 031 406
- US-A- 4 100 426
- US-A- 4 620 283
- US-A- 4 819 180

## Description

L'invention concerne un dispositif de gestion de puissance électrique comportant :
- des moyens de mesure pour mesurer le courant circulant dans un circuit principal d'une installation connecté à un réseau de distribution à travers un disjoncteur, le circuit principal alimentant des circuits prioritaires et une pluralité de circuits non-prioritaires,
- des moyens de délestage et de relestage, connectés aux moyens de mesure, comportant des moyens d'interruption du courant dans les circuits non-prioritaires,

Les installations électriques sont généralement connectées à un réseau de distribution à travers un disjoncteur de tête. Les fonctions dudit disjoncteur sont la protection de l'installation en cas de court-circuit ou de forte surcharge et la limitation de la puissance maximale fournie par le réseau. La calibration du disjoncteur dépend de l'abonnement demandé au fournisseur d'énergie électrique.

Dans les habitations comportant une grande quantité d'appareils électriques, par exemple des appareils de chauffage, la puissance installée correspondant à la somme des puissances de tous les appareils électriques est supérieure à la puissance maximale disponible limitée par le disjoncteur. Une augmentation de la puissance maximale disponible pour couvrir simultanément l'ensemble des besoins en énergie électrique conduirait à des coûts d'abonnement très élevés.

Une solution bien connue pour limiter la puissance maximale absorbée par une installation électrique consiste à utiliser des dispositifs délesteurs-relesteurs. Les installations sont alors partagées en deux parties. Une première partie pour alimenter des charges prioritaires et une seconde partie où sont connectées des charges non-prioritaires, par exemple des appareils de chauffage. La puissance maximale disponible doit, cependant, être supérieure à la puissance de l'ensemble des charges prioritaires.

Les dispositifs de délestage et de relestage connus contrôlent un nombre limité de charges non-prioritaires. Ils rendent difficiles toute évolution ou modification de l'installation. Dans des dispositifs complexes, lorsque le nombre de charges est élevé, le délestage est fait progressivement. Les charges non-prioritaires sont délestées séquentiellement à tour de rôle. Ce mode de fonctionnement risque de provoquer un déclenchement du disjoncteur de tête si la charge la plus importante n'est pas délestée assez tôt.

L'invention a pour but un dispositif de gestion de puissance d'une installation électrique évitant les risques de déclenchement du disjoncteur lors du délestage et permettant une évolution et une modification faciles de l'installation.

Ce but est atteint par le fait que les moyens de délestage et de relestage comportent :
- des moyens pour délester le courant simultanément dans tous les circuits non-prioritaires lorsque la valeur du courant mesuré dépasse un premier seuil prédéterminé,
- des moyens pour relester séquentiellement le courant dans les circuits non-proritaires tant que la valeur du courant mesuré est inférieure à un second seuil prédéterminé.

Selon un développement de l'invention, les moyens de délestage et de relestage comportent des moyens pour rétablir, pendant un temps prédéterminé, le courant dans des circuits non-prioritaires lorsque la valeur du courant mesuré est comprise entre les premier et second seuils prédéterminés, le courant étant rétabli, par rotation à l'intérieur d'au moins un groupe de circuits non-prioritaires.

Dans un mode de réalisation préférentiel, les moyens de délestage et de relestage comportent:
- un module de gestion connecté aux moyens de mesure,
- des actionneurs associés à chaque circuit non-prioritaire et respectivement connectés entre le circuit principal et le circuit non-prioritaire associé,
- des moyens de contrôle connectés au module de gestion et aux actionneurs.

Le module de gestion transmet aux moyens de contrôle des signaux de commande de délestage lorsque la valeur du courant mesuré est supérieure au premier seuil, des signaux de commande de relestage lorsque la valeur du courant mesuré est inférieure au second seuil, et des signaux de commande de rotation lorsque la valeur du courant mesuré est comprise entre les premier et second seuils.

Selon un mode particulier de réalisation, les moyens de contrôle comportent des modules de contrôle respectivement connectés au module de gestion et à un actionneur associé.

Chaque module de contrôle comporte une entrée de priorité de relestage connectée à un module de priorité immédiatement supérieure pour recevoir une information représentative de l'état de relestage du module précédent et une sortie de priorité de relestage connectée à l'entrée de priorité de relestage d'un module de priorité immédiatement inférieure et fournissant une information représentative de son propre état de relestage.

Des modules de contrôle comportent une entrée de rotation connectée à un module de priorité immédiatement supérieure pour recevoir une information représentative de l'état de rotation du module précédent et une sortie de rotation connectée à l'entrée de rotation d'un module de priorité immédiatement inférieure et fournissant une information représentative de son propre état de rotation, la sortie de rotation d'un module de priorité basse étant connectée à l'entrée d'un module de priorité élevée pour former une boucle de rotation d'un groupe de modules.

Selon un développement du mode de réalisation préféré, les moyens de contrôle comportent :
- un module émetteur connecté au module de gestion et recevant les signaux de commande de délestage, de relestage, et de rotation,
- un système de communication connecté au module émetteur,
- des modules récepteurs connectés respectivement au système de communication et à un actionneur associé.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La figure 1 représente une installation électrique comportant un dispositif de délestage connu.

La figure 2 montre, sur un diagramme, les diverses puissances caractéristiques d'une installation électrique.

La figure 3 représente une installation comportant un dispositif de gestion selon un premier mode de réalisation de l'invention.

La figure 4 montre l'organisation de modules de contrôle pouvant faire partie d'un dispositif de gestion selon la figure 3.

Les figures 5a à 5d illustrent le fonctionnement du dispositif de gestion selon les figures 3 et 4.

La figure 6 montre une installation comportant un dispositif de gestion selon un mode préférentiel de réalisation.

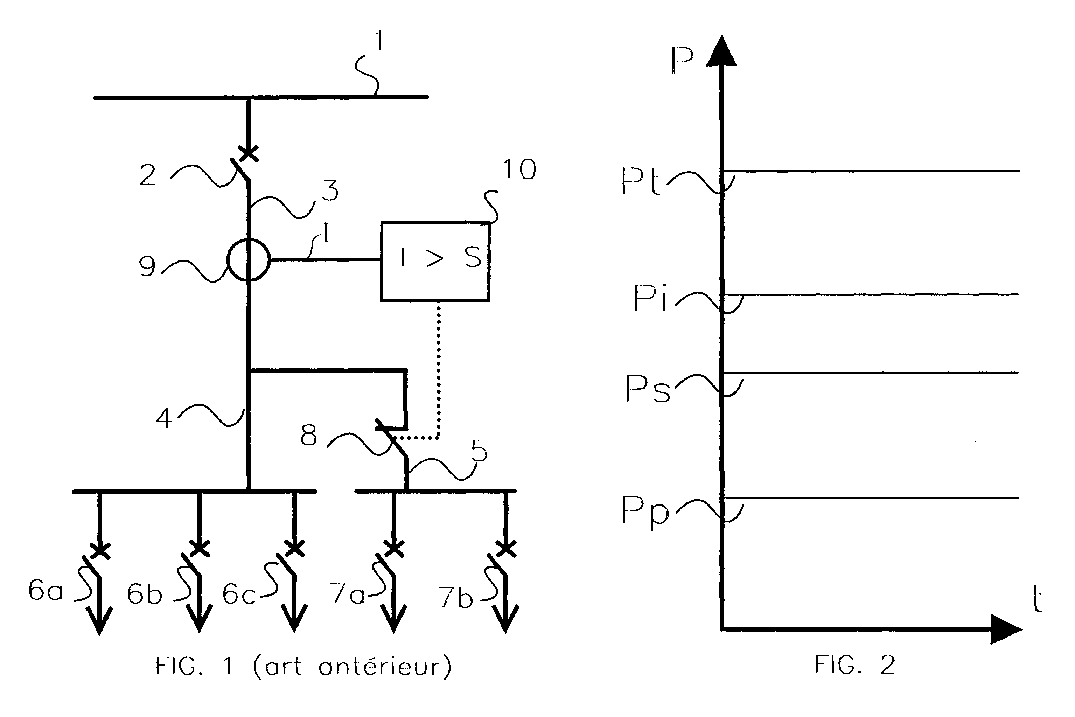

Les installations électriques connues, comme celle représentée sur la figure 1, sont alimentées par un réseau de distribution 1 à travers un disjoncteur 2 de tête. L'installation comporte un circuit principal 3 connecté en aval du disjoncteur, un circuit prioritaire 4 connecté au circuit principal pour l'alimentation de charges prioritaires et un circuit non-prioritaire 5 connecté à travers un contacteur 8 au circuit principal pour l'alimentation de charges non-prioritaires. Les charges prioritaires et non-prioritaires peuvent être protégées par des disjoncteurs de répartition 6a, 6b, 6c et 7a, 7b respectivement connectés au circuit 4 prioritaire et au circuit 5 non-prioritaire.

La gestion des charges non-prioritaires est assurée par un dispositif de délestage comportant un dispositif de mesure 9 du courant circulant dans le circuit principal, un circuit 10 de contrôle connecté au dispositif de mesure 9, et le contacteur 8 commandé par le circuit de contrôle. Le dispositif de mesure 9 fournit au circuit 10 un signal I représentatif du courant circulant dans le circuit principal. Ensuite, le circuit 10 compare le signal I à un seuil S prédéterminé. Si le signal I est supérieur au seuil S, le circuit 10 commande l'ouverture du contacteur 8 qui coupe l'alimentation du circuit non-prioritaire. Lorsque le signal devient inférieur au seuil S, le circuit 10 commande la fermeture du contacteur 8 et le circuit non prioritaire est de nouveau alimenté. Les circuits de délestage connus ont des seuils comportant un cycle d'hystérésis ou des circuits de temporisation pour éviter les risques de battement du contacteur 8.

La figure 2 montre un diagramme des différentes puissances qui caractérisent une installation électrique. La somme des puissances protégées correspondant à l'ensemble des calibres des disjoncteurs de répartition est représentée par une puissance totale protégée Pt. La somme des puissances réellement installées, correspondant à l'ensemble des charges électriques de l'installation, est représentée par une puissance installée Pi, inférieure à Pt. La puissance maximale disponible limitée par le calibre du disjoncteur 2 est représentée par une puissance souscrite Ps inférieure ou égale à Pi et correspondant à un courant maximum Is. La totalité des charges prioritaires correspond à une puissance Pp, inférieure à Ps, et à un courant Ip prioritaires.

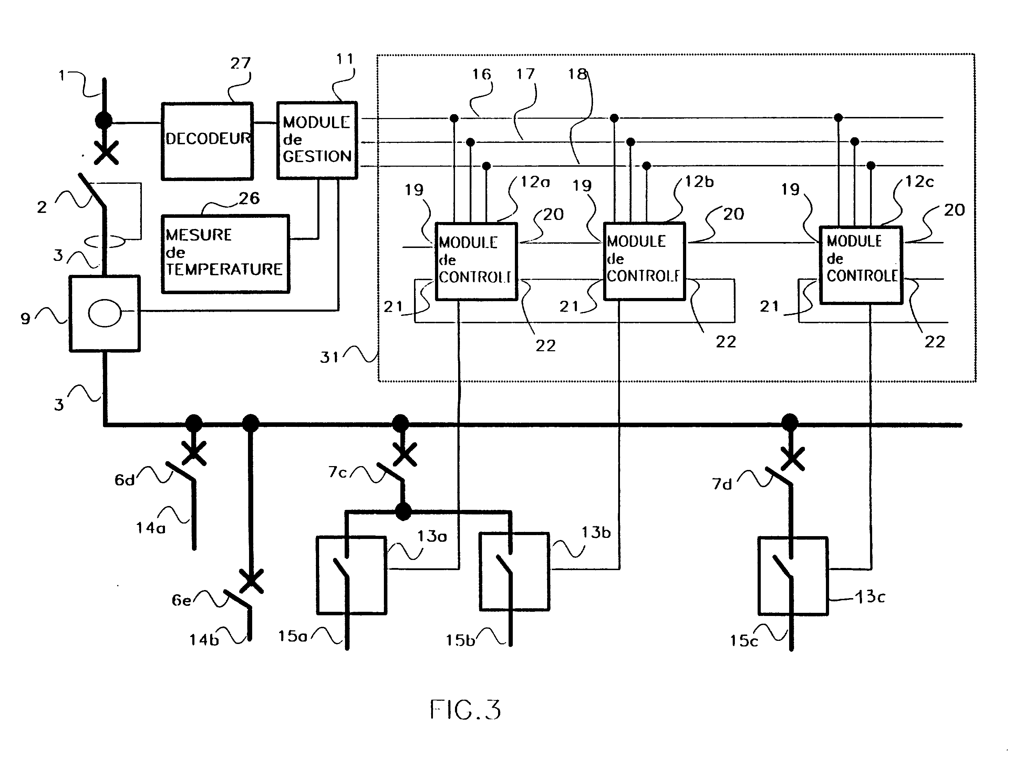

Une installation électrique comportant un dispositif de gestion de puissance selon un mode de réalisation de l'invention est représenté sur la figure 3. Le réseau de distribution 1 alimente le circuit principal 3 à travers le disjoncteur 2. Le dispositif 9 de mesure fournit le signal I représentatif du courant circulant dans le circuit principal 3. Des circuits prioritaires 14a et 14b sont connectés au circuit principal 3 à travers des disjoncteurs de répartition respectivement 6d et 6e. Des circuits non-prioritaires 15a, 15b et 15c sont connectés à des interrupteurs commandés respectivement 13a, 13b, 13c. Les actionneurs 13a, 13b et 13c sont connectés au circuit principal 3 à travers des disjoncteurs de répartition 7c et 7d, le disjoncteur 7c étant connecté aux actionneurs 13a et 13b et le disjoncteur 7d étant connecté à l'actionneur 13c.

Un module de gestion 11 connecté aux moyens de mesure 9 reçoit le signal I et fournit des signaux de commande de délestage 16, des signaux de commande de relestage 17, et des signaux de commande de rotation 18 à un dispositif de contrôle 31. Le dispositif 31 comporte des modules 12a, 12b, 12c de contrôle connectés respectivement aux actionneurs 13a, 13b, 13c de manière à contrôler l'alimentation des circuits non-prioritaires 15a, 15b, 15c par le circuit principal 3. Les modules de contrôle comportent des entrées connectées au module de gestion pour recevoir les signaux de commande 16, 17, 18.

Dans ce mode de réalisation de l'invention, le module de gestion compare la valeur du signal I représentatif du courant circulant dans le circuit principal à un premier seuil I1 prédéterminé et déleste la totalité des charges non-prioritaires si le signal I est supérieur au seuil I1. Le module de gestion commande le délestage en envoyant le signal 16 à tous les modules de contrôle qui font ouvrir les actionneurs. Ensuite, pendant un cycle de relestage, le module de gestion commande séquentiellement le relestage des circuits non-prioritaires en envoyant le signal 17 aux modules de contrôle. Par exemple, dans le mode de réalisation de la figure 3, le module de gestion commande le relestage du circuit 15a par l'intermédiaire du module 12a de contrôle et l'actionneur 13a, puis le relestage du circuit 15b, le circuit 15a restant connecté au circuit principal, et enfin le relestage du circuit 15c, les circuits 15a et 15b restant connectés.

Pendant le relestage, le courant du circuit principal augmente et le signal I peut dépasser un second seuil prédéterminé I2 inférieur au premier seuil I1 avant que toutes les charges non-prioritaires soient connectées. Lorsque le signal I devient supérieur au second seuil I2 mais inférieur au premier seuil I1, le module de gestion 11 commande la rotation des circuits non-prioritaires restants en état de délestage.

Dans une première variante du mode de réalisation, chaque circuit non-prioritaire restant est relesté à tour de rôle. Ainsi par exemple, dans une installation comportant 5 circuits non-prioritaires, non représentés sur la figure 3, le second seuil I2 peut être dépassé lorsque le premier et le second circuits sont réalimentés. Le module de gestion commande, en émettant le signal 18, l'alimentation par la rotation des trois circuits non-prioritaires restants. Le troisième circuit est connecté en premier pendant un temps prédéterminé puis il est déconnecté et le quatrième circuit est connecté pendant un temps prédéterminé, ensuite, ce sera au tour du cinquième circuit à être connecté. Après le cinquième circuit, le troisième circuit est connecté et le cycle recommence.

Selon une seconde variante du mode de réalisation, des circuits non-prioritaires sont relestés en même temps alors que les autres circuits sont délestés. Le nombre de circuits non-prioritaires relestés en même temps est équivalent au nombre de circuits non-prioritaires successifs en état de relestage au moment où I devient supérieur à I2 et inférieur à I1. Par exemple, dans une installation comportant 5 circuits non-prioritaires, non représentés sur les figures, le second seuil peut être dépassé lorsque le premier et le second circuits sont relestés. Le nombre de signaux relestés est deux. Puis, le module de gestion émet le signal de rotation 18 qui décale d'un rang les deux circuits non-prioritaires à relester. Le premier circuit est alors délesté, les second et troisième circuits sont relestés et les quatrième et cinquième circuits restent délestés. A la commande de rotation suivante, le troisième et le quatrième sont relestés et les autres sont en état de délestage. Lors des impulsions suivantes les circuits relestés seront les quatrième et cinquième, puis les cinquième et premier, ensuite les premier et second, après, la boucle recommence.

Dans tous les cas, pendant le fonctionnement en rotation, le nombre de circuits non-prioritaires en état de relestage reste courant.

Si, pendant les cycles de relestage ou de rotation, le signal I dépasse de nouveau le premier seuil I1, le module de gestion 11 envoie un nouveau signal de délestage 16, puis des signaux de relestage 17 et éventuellement des signaux de rotation 18 si tous les circuits non-prioritaires ne sont pas relestés avant que le courant ne dépasse le second seuil I2.

Les modules de contrôle, recevant les signaux de commande 16, 17 et 18, relestent les circuits non-prioritaires selon un ordre de priorité prédéterminé. Dans le mode de réalisation de la figure 3, chaque module de contrôle comporte une entrée de priorité 19, une sortie de priorité 20, une entrée de boucle de rotation 21 et une sortie de boucle de rotation 22. La sortie de priorité 20 d'un module de contrôle de priorité élevée 12a est connectée à l'entrée de priorité 19 d'un module de contrôle moins prioritaire 12b. L'ensemble des modules connectés forme une chaîne de priorité décroissante. L'entrée 19 du module 12a, le plus prioritaire, est forcée à un degré de priorité le plus élevé. Lorsque l'interruption d'un module de priorité élevée est commandé en relestage, le module correspondant indique au module suivant qu'il peut relester au prochain signal de commande de relestage 17.

Dans une installation à boucle de rotation unique, l'entrée 21 de boucle de rotation d'un module de contrôle est connectée à la sortie 22 du module de contrôle de priorité immédiatement supérieure. Le module de priorité la plus élevée a son entrée connectée à la sortie du module de priorité la moins élevée pour fermer la boucle de rotation.

Les boucles de rotation peuvent être multiples et réparties par groupes de modules de contrôle de manière à donner plus de souplesse à la gestion de l'installation. Par exemple, sur la figure 3, les modules de contrôle 12a et 12b constituent un premier groupe comportant une première boucle de rotation. L'entrée 21 du module 12b est connectée à la sortie 22 du module 12a et l'entrée 21 du module 12a est connectée à la sortie 22 du module 12b. Le module 12c fait partie d'un autre groupe comportant une autre boucle de rotation. Les groupements des modules de contrôle permettent de limiter les rotations effectives à un seul groupe lorsque le signal de commande de rotation 18 est envoyé par le module de gestion. Pour les groupes de priorité plus élevée où tous les circuits sont relestés et les groupes de priorité moins élevés où les circuits sont tous délestés, la rotation n'a pas d'effet et l'état des circuits ne change pas.

Dans la première variante, lors de l'émission d'un premier signal de rotation 18, un module de contrôle lit sur ses entrées 19 et 21 l'état du module précédent de priorité plus élevée. Si l'entrée 19 est à l'état haut (active) et l'entrée 21 à l'état bas (inactive), elles indiquent à leur module qu'il est le premier à relester en rotation. Le module se met alors en état de relestage et positionne sa sortie 20 à l'état bas et sa sortie 22 à l'état haut, ces deux états correspondant au relestage par rotation. Si les deux entrées 19 et 21 sont à l'état bas, le module se met ou reste en état de délestage et positionne ses sorties 20 et 22 à l'état bas. Pendant l'émission des signaux 18 de rotation suivants, si l'entrée 19 est à l'état bas et l'entrée 21 à l'état haut, le module se met en état de relestage en rotation ; il positionne sa sortie 20 à l'état bas et la sortie 22 à l'état haut. Si les deux entrées 19 et 21 sont à l'état bas le module se met ou reste en état de délestage et positionne ses sorties 20 et 22 à l'état bas. Contrairement au fonctionnement lors du premier signal de rotation, si l'entrée 19 est à l'état haut et l'entrée 21 à l'état bas pendant les autres signaux de rotation 18, le module se met ou reste en état de délestage et positionne des sorties 20 et 22 à l'état bas. Les modules en état de relestage ont l'entrée 19 et la sortie 20 à l'état haut. Leur état n'est pas modifié par les signaux de rotation. Ils transmettent simplement l'état de leur entrée 21 vers leur sortie 22.

Dans la seconde variante, pendant la rotation, un module de contrôle prend l'état du module précédant dans la boucle de rotation. Le module précédant le premier module de la boucle est le dernier de cette même boucle, la sortie 22 du dernier module étant connectée à l'entrée 21 du premier module. Chaque groupe fonctionne, pendant la rotation, de manière équivalente à un registre à décalage.

Les connexions des entrées 19 et des sorties 20 des modules de contrôle définissent un ordre de priorité décroissant des circuits non-prioritaires lorsque le module de gestion envoie des signaux de commande de relestage. Les entrées 21 et les sorties 22 des modules de contrôle, connectées en boucles de rotation, définissent des groupements de modules de contrôle. Chaque groupement a un niveau de priorité défini par la connexion de l'entrée 19 de son premier module à la sortie 20 d'un dernier module d'un groupement de priorité supérieure.

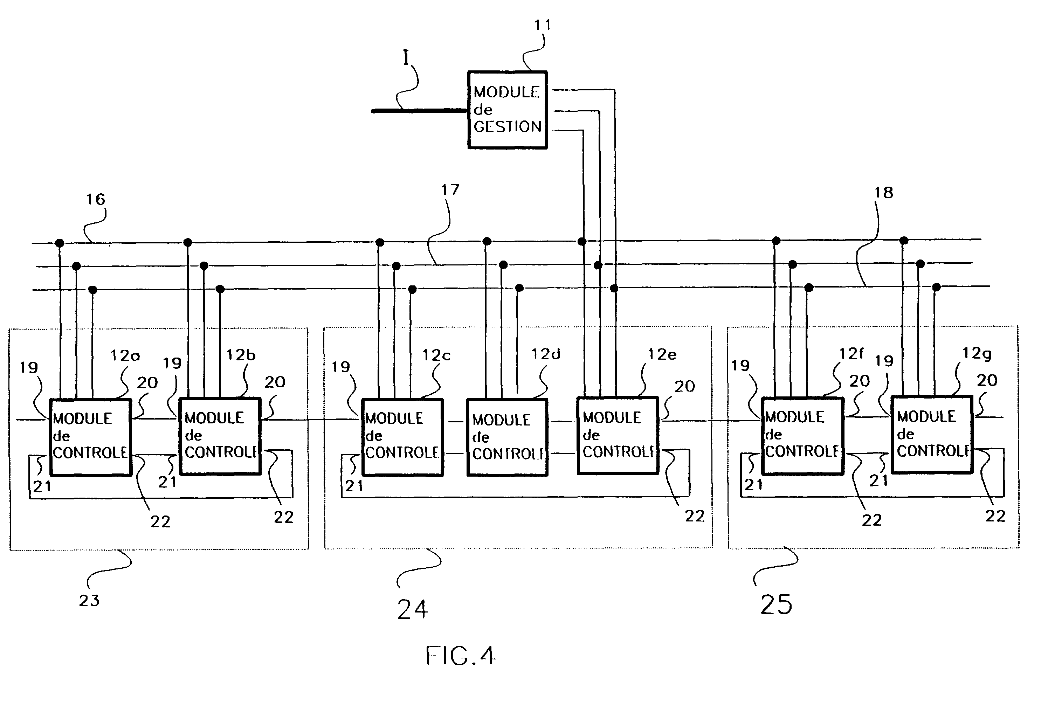

La figure 4 montre trois groupements 23, 24, 25 de modules de contrôle. Le premier groupement 23 comporte les modules de contrôle 12a et 12b. La connexion de la sortie 22 du dernier module 12b à l'entrée 21 du premier module 12a de ce premier groupement détermine une première boucle de rotation. Le second groupement 24 comporte trois modules de contrôle 12c, 12d et 12e. La sortie 22 du dernier module 12e de ce groupement est connectée à l'entrée 21 du premier module 12c de ce groupement pour définir la seconde boucle de rotation. Le troisième groupement 25 comporte deux modules de contrôle 12f et 12g. La sortie 22 du dernier module 12g du troisième groupement est connectée à l'entrée du premier module 12f du troisième groupement, pour définir la troisième boucle de rotation. Tous les modules de contrôle reçoivent les signaux de commande de délestage 16, de relestage 17 et de rotation 18.

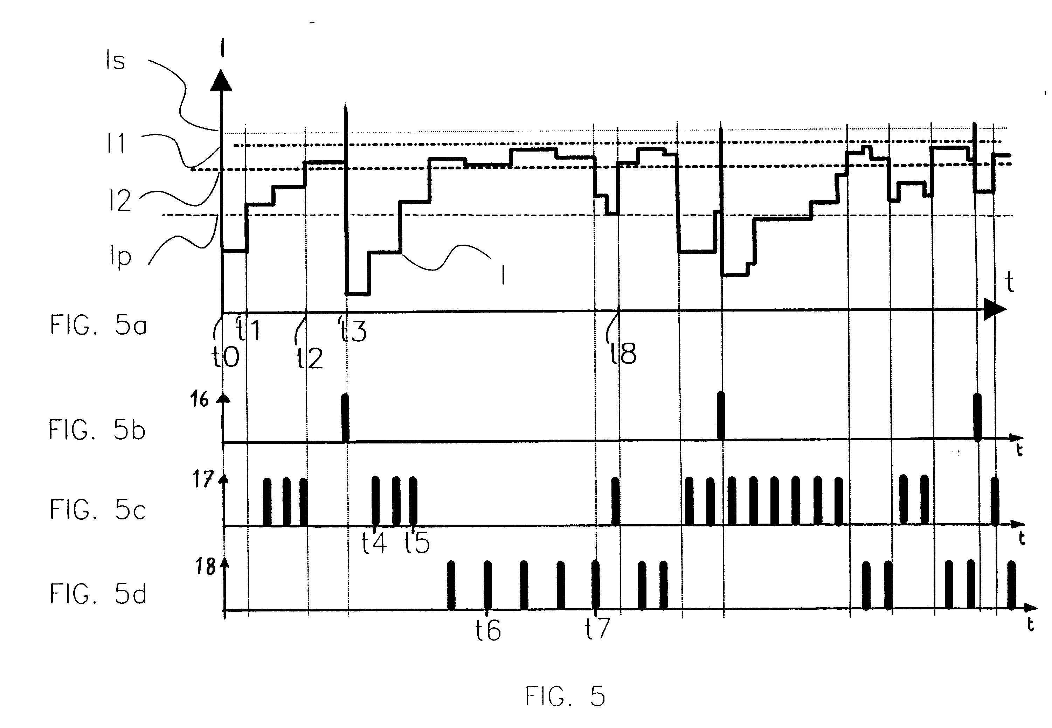

Le fonctionnement du mode de réalisation de la figure 4 est représenté sur les figures 5a, 5b, 5c et 5d. La figure 5a illustre le signal de courant I et les figures 5b, 5c et 5d représentent respectivement les signaux de commande 16, 17, 18. L'état actif des signaux est indiqué par des impulsions. A un instant t0 le signal de courant I est inférieur à une valeur Ip représentant la totalité des charges prioritaires. Ensuite entre des instants t1 et t2 des signaux de relestage provoquent une augmentation des charges électriques connectées au circuit principal et une augmentation de courant représentée par le signal I. A un instant t3, le signal I dépasse le premier seuil I1 et un signal de commande de délestage 16 met en état de délestage tous les modules de contrôle 12a à 12g. La valeur de I baisse rapidement. Ensuite, entre des instants t4 et t5, des signaux 17 successifs de commande de relestage (fig. 5C) mettent en état de relestage en premier lieu le module 12a (instant t4) puis le module 12b et ensuite le module 12c.

Pendant le relestage, le courant augmente et après l'instant t5 la valeur du signal I (fig. 5a) dépasse le second seuil I2 prédéterminé sans atteindre le premier seuil I1. Les impulsions de relestage 17 sont interrompues et le module de gestion 11 commence à envoyer, à partir d'un instant t6, des impulsions de rotation 18 successives (fig. 5d). La rotation consiste à mettre en l'état de relestage, à tour de rôle ou par décalage, les modules d'un groupement connectés entre eux dans une même boucle de rotation. Le nombre de modules en état de délestage étant constant pendant un cycle de rotation. Les modules 12d et 12e du groupement 24 sont à tour de rôle successivement en état de délestage puis de relestage. La rotation effective est limitée au groupement 24 et ne se propage pas au groupement 25. Les modules 12f et 12g restent alors en état de délestage tant que tous les modules de contrôle 12a à 12e des groupements 23 et 24 ne sont pas en état de relestage, le groupement 24 et le groupement 25 ayant des boucles de rotation différentes. Dans ce cas, la rotation n'a pas d'effet sur les modules des groupements 23 et 25 qui ne changent pas d'état.

Tant que le signal I reste entre les deux seuils prédéterminés I2 et I1, des impulsions de rotation sont émises. A un instant t7, après une impulsion de rotation, le signal I devient inférieur au second seuil I2. Le contrôleur de gestion envoie alors une impulsion 17 de relestage à un instant t8, puis le signal I revient entre les deux seuils I1 et I2.

Les impulsions de relestage 17 sont espacées de quelques secondes pour réalimenter rapidement des charges de priorité élevée de circuits non-prioritaires. Pendant la rotation les charges doivent être alimentées pendant un temps suffisamment long, compatible avec leur fonctionnement. Par exemple, pour l'alimentation d'appareils de chauffage, les impulsions de rotation sont espacées de plusieurs minutes.

Les actionneurs peuvent avoir des positions forcées en ouverture ou en fermeture. En position de fermeture forcée, le circuit connecté à l'actionneur devient prioritaire et n'est plus concerné par le délestage.

Un dispositif 26 de mesure de température (figure 3) peut être connecté au module de gestion 11. n envoie des informations de température d'une ou de plusieurs zones de l'installation. Le module de gestion peut, en fonction de ces informations de température, modifier ses fonctions de délestage, de relestage et de rotation, par exemple en modifiant les seuils I1 ou I2, ou en modifiant le temps entre les impulsions de relestage ou de rotation.

Sur la figure 3 un décodeur 27 connecté au réseau 1 de distribution reçoit des informations sur la tarification de l'énergie électrique fournie. En effet, le coût de l'énergie électrique est moins élevé à certains moments de la journée (heures creuses) ou est très élevé à certains moments de l'année (jours de pointe). Une entrée du module de gestion connectée au décodeur 27 reçoit les informations de tarification du décodeur. Le module de gestion modifie son fonctionnement en fonction des informations de tarification. Par exemple, lorsque le coût de l'énergie est élevé, les seuils I1 et I2 peuvent être diminués de manière à réduire le relestage et la rotation de circuits non-prioritaires. Dans le cas où le coût de l'énergie électrique est faible, le module de gestion positionne les seuils à des valeurs hautes. Par exemple, le premier seuil I1 peut être égal à une valeur correspondant au calibre du disjoncteur 2 de manière à pouvoir utiliser la puissance maximale souscrite.

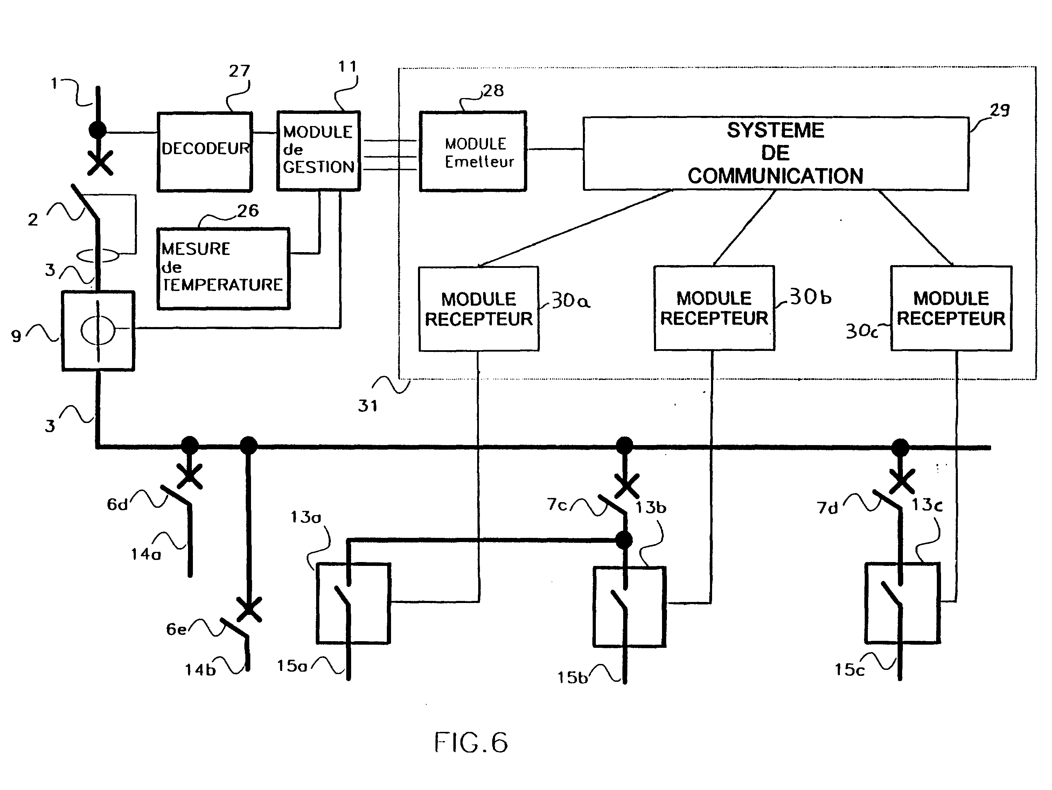

La figure 6 montre un autre mode de réalisation. Le système de contrôle 31 comporte un module émetteur 28, un système de communication 29 et des modules récepteurs 30a, 30b et 30c. Les signaux de commande de délestage 16, de relestage 17 et de rotation 18 sont envoyés sur des entrées du module émetteur 28. Une sortie du module émetteur est connectée au système 29 de communication. Les modules 30a, 30b et 30c récepteurs sont connectés au système de communication. Ils reçoivent des signaux de commande pour contrôler l'ouverture et la fermeture des actionneurs, respectivement 13a, 13b et 13c.

Les modules récepteurs sont reliés entre eux à travers le système de communication 29 pour recevoir et émettre des signaux représentatifs des entrées 19 et 21 et des sorties 20 et 22. Comme les modules de contrôle 12a à 12g, les modules récepteurs 30a à 30c sont organisés selon un ordre de priorité décroissante avec la possibilité de groupement par boucles de rotation multiples.

Dans un autre mode de réalisation, les modules récepteurs de la figure 6 reçoivent des signaux de commande du module émetteur mais ne communiquent pas entre eux. Le module émetteur interprète les signaux de commande de délestage 16, de relestage 17 et de rotation 18, détermine lui-même l'ordre de priorité du relestage et les groupements de rotation, et envoie des signaux de commande à chaque module récepteur. L'ordre de priorité et les groupements de rotation sont prédéterminés, par exemple par programmation, dans le module émetteur.

Le système de communication utilise pour véhiculer des informations, par exemple des liaisons filaires sous la forme d'un bus ou des courants porteurs injectés dans les circuits de l'installation. Dans d'autres modes de réalisation, il peut avantageusement comporter des liaisons lumineuses infrarouges ou des liaisons radio.

Les modules de contrôle sont réalisés par des circuits électroniques reliés aux actionneurs associés et installés dans des tableaux de distribution électrique. Ils peuvent également être réalisés sous forme de fonctions dans un programme de gestion. Les signaux 16, 17, 18 et les valeurs appliquées sur les entrées 19 et 21 sont alors des variables d'entrée des fonctions qui fournissent en sortie les signaux de commande des actionneurs associés et les signaux des sorties 20 et 22.

Les dispositifs de mesure du courant comportent généralement des transformateurs de courants bien que tout autre moyen puisse être utilisé. Le signal I peut être fourni par des dispositifs de mesure complexes, comme des compteurs d'énergie électrique, comportant une sortie de mesure du courant. Le mode de réalisation d'un dispositif de gestion décrit ci-dessus peut être utilisé dans les installations électriques en courant alternatif monophasé ou triphasé. Dans les installations triphasées le signal I représente les valeurs des courants des trois phases. L'invention peut également être appliquée à des installations à courant continu.

## Revendications

1. Dispositif de gestion de puissance électrique comportant :
- des moyens de mesure (9) pour mesurer le courant circulant dans un circuit principal (3) d'une installation connecté à un réseau (1) de distribution à travers un disjoncteur (2), le circuit principal (3) alimentant des circuits prioritaires (4, 14a, 14b) et une pluralité de circuits non-prioritaires (5, 15a, 15b, 15c),
- des moyens (10) de délestage et de relestage, connectés aux moyens de mesure, comportant des moyens (8, 13a, 13b, 13c) d'interruption du courant dans les circuits non-prioritaires,
dispositif caractérisé en ce que les moyens de délestage et de relestage comportent :
- des moyens (11, 12a-12g, 13a-13c, 18, 30a-30c) pour délester le courant simultanément dans tous les circuits non-prioritaires lorsque la valeur du courant mesuré (I) dépasse un premier seuil prédéterminé (I1),
- des moyens (11, 12a-12g, 15a-15c, 18, 30a-30c) pour relester séquentiellement le courant dans les circuits non-proritaires tant que la valeur du courant mesuré (I) est inférieure à un second seuil prédéterminé (I2).

2. Dispositif de gestion selon la revendication 1 caractérisé en ce que les moyens de délestage et de relestage comportent des moyens (11, 12a-12g, 13a-13c, 18, 30a-30c) pour rétablir, pendant un temps prédéterminé, le courant dans des circuits non-prioritaires lorsque la valeur du courant (I) mesuré est comprise entre les premier et second seuils prédéterminés (I1, I2), le courant étant rétabli, par rotation à l'intérieur d'au moins un groupe (23, 24, 25) de circuits non-prioritaires.

3. Dispositif de gestion selon l'une des revendications 1 et 2 caractérisé en ce que les moyens de délestage et de relestage comportent :
- un module (11) de gestion connecté aux moyens (9) de mesure,
- des actionneurs (13a, 13b, 13c) associés à chaque circuit non-prioritaire et respectivement connectés entre le circuit principal (3) et le circuit non-prioritaire associé (15a, 15b, 15c),
- des moyens (31) de contrôle connectés au module de gestion et aux actionneurs.

4. Dispositif de gestion selon la revendication 3 caractérisé en ce que le module de gestion (11) transmet aux moyens de contrôle (31, 12a-12g) des signaux de commande de délestage (16) lorsque la valeur du courant mesuré (I) est supérieure au premier seuil (I1), des signaux de commande de relestage (17) lorsque la valeur du courant mesuré (I) est inférieure au second seuil (I2), et des signaux de commande de rotation (18) lorsque la valeur du courant mesuré (I) est comprise entre les premier et second seuils (I1, I2).

5. Dispositif de gestion selon l'une des revendications 3 et 4 caractérisé en ce que les moyens de contrôle (31) comportent des modules (12a-12c) de contrôle respectivement connectés au module de gestion (11) et à un actionneur associé (13a-13c).

6. Dispositif de gestion selon la revendication 5 caractérisé en ce que chaque module de contrôle (12a-12g) comporte une entrée (19) de priorité de relestage connectée à un module de priorité immédiatement supérieure pour recevoir une information représentative de l'état de relestage du module précédent et une sortie (20) de priorité de relestage connectée à l'entrée de priorité de relestage d'un module de priorité immédiatement inférieure et fournissant une information représentative de son propre état de relestage.

7. Dispositif de gestion selon l'une des revendications 5 et 6 caractérisé en ce que des modules de contrôle comportent une entrée (21) de rotation connectée à un module de priorité immédiatement supérieure pour recevoir une information représentative de l'état de rotation du module précédent et une sortie (22) de rotation connectée à l'entrée de rotation d'un module de priorité immédiatement inférieure et fournissant une information représentative de son propre état de rotation, la sortie de rotation (22) d'un module de priorité basse étant connectée à l'entrée (21) d'un module de priorité élevée pour former une boucle de rotation d'un groupe de modules (22, 23, 24).

8. Dispositif de gestion selon l'une des revendications 3 et 4 caractérisé en ce que les moyens de contrôle (31) comportent :
- un module (28) émetteur connecté au module de gestion (11) et recevant les signaux de commande de délestage (16), de relestage (17), et de rotation (18),
- un système de communication (29) connecté au module émetteur,
- des modules (30a, 30b, 30c) récepteurs connectés respectivement au système de communication (29) et à un actionneur associé.

9. Dispositif de gestion selon l'une quelconque des revendications 1 à 8 caractérisé en ce qu'il comporte des moyens (27) de décodage connectés au réseau de distribution (1) et aux moyens de délestage et relestage et recevant des informations concernant la tarification de la puissance fournie par le réseau, les informations étant utilisées dans les moyens de délestage et relestage pour modifier les seuils (I1, I2) prédéterminés.

10. Dispositif de gestion selon l'une quelconque des revendications 1 à 9 caractérisé en ce qu'il comporte des moyens (26) de mesure de température connectés aux moyens de délestage et relestage.

## Patentansprüche

1. Anordnung zur Regelung der elektrischen Leistung mit
- Meßmitteln (9) zur Messung des Stroms in einem über einen Leistungsschalter (2) an ein Verteilernetz (1) angeschlossenen Hauptstromkreis (3) einer Installation, welcher Hauptstromkreis (3) vorrängige Stromkreise (4, 14a, 14b) sowie mehrere nicht vorrängige Stromkreise (5, 15a, 15b, 15c) speist,
- sowie Lastabwurf- und -wiederaufnahmemitteln (10), die an die Meßmittel angeschlossen sind und Mittel (8, 13a, 13b, 13c) zur Unterbrechung des Stroms in den nicht vorrängige Stromkreisen umfassen,
dadurch gekennzeichnet, daß die Lastabwurf- und -wiederaufnahmemittel
- Mittel (11, 12a-12g,13a-13c, 18, 30a-30c) zur gleichzeitigen Abschaltung des Stroms in allen nicht vorrängige Stromkreisen bei Überschreiten eines ersten festgelegten Schwellwerts (I1) durch den Meßwert des Stroms (I),
- sowie Mittel (11, 12a-12g, 15a-15c, 18, 30a-30c) zur sequentiellen Wiederaufschaltung des Stroms in den nicht vorrängige Stromkreisen bei unter einem zweiten festgelegten Schwellwert (I2) liegendem Meßwert des Stroms (I) umfaßt.

2. Regelanordnung nach Anspruch 1, dadurch gekennzeichnet. daß die Lastabwurf- und - wiederaufnahmemittel Mittel (11, 12a-12g, 13a-13c, 18, 30a-30c) umfassen, um den Strom in den nicht vorrängige Stromkreisen für eine bestimmte Zeitdauer wieder aufzuschalten, wenn der Meßwert des Stroms (I) zwischen dem ersten und dem zweiten festgelegten Schwellwert (I1, I2) liegt, wobei die Aufschaltung des Stroms durch Lastrotation innerhalb mindestens einer Gruppe von nicht vorrängige Stromkreisen (23, 24, 25) erfolgt.

3. Regelanordnung nach einem der Ansprüche 1 und 2, dadurch gekennzeichnet, daß die Mittel zum Lastabwurf und zur Lastwiederaufnahme
- ein an die Meßmittel (9) angeschlossenes Regelmodul (11),
- jedem nicht vorrängige Stromkreis zugeordnete und jeweils zwischen den Hauptstromkreis (3) und den zugeordneten nicht vorrängige Stromkreis (15a, 15b, 15c) geschaltete Schaltorgane (13a, 13b, 13c),
- sowie an das Regelmodul und die Schaltorgane angeschlossene Steuermittel (31) umfaßt.

4. Regelanordnung nach Anspruch 3, dadurch gekennzeichnet, daß das Regelmodul (11) die Steuermittel (31, 12a-12g) bei einem über dem ersten Schwellwert (I1) liegenden Meßwert des Stroms (I) mit Steuersignalen zum Lastabwurf (16), bei einem unter dem zweiten Schwellwert (I2) liegenden Meßwert des Stroms (I) mit Steuersignalen zur Lastwiederaufnahme (17) und bei einem zwischen dem ersten und dem zweiten Schwellwert (I1, I2) liegenden Meßwert des Stroms (I) mit Steuersignalen zur Lastrotation (18) beaufschlagt.

5. Regelanordnung nach einem der Ansprüche 3 und 4, dadurch gekennzeichnet, daß die Steuermittel (31) Steuermodule (12a-12c) umfassen, die jeweils an das Regelmodul (11) und an ein zugeordnetes Schaltorgan (13a-13c) angeschlossen sind.

6. Regelanordnung nach Anspruch 5, dadurch gekennzeichnet, daß jedes Steuermodul (12a-12g) einen, mit einem Modul der nächsthöheren Prioritätsstufe verbundenen Wiederaufnahme-Prioritätseingang (19) zur Aufnahme einer den Lastwiederaufnahmezustand des vorausgehenden Moduls abbildenden Information sowie einen Wiederaufnahme-Prioritätsausgang (20) umfaßt, der mit dem Wiederaufnahme-Prioritätseingang eines Moduls der nächstniedrigeren Prioritätsstufe verbunden ist und eine seinen eigenen Lastaufnahmezustand abbildende Information liefert.

7. Regelanordnung nach einem der Ansprüche 5 und 6, dadurch gekennzeichnet, daß die Steuermodule einen, mit einem Modul der nächsthöheren Prioritätsstufe verbundenen Lastrotationseingang (21) zur Aufnahme einer den Lastrotationszustand des vorausgehenden Moduls abbildenden Information sowie einen Lastrotationsausgang (22) umfassen, der mit dem Lastrotationseingang eines Moduls der nächstniedrigeren Prioritätsstufe verbunden ist und eine seinen eigenen Lastrotationszustand abbildende Information liefert, wobei der Lastrotationsausgang (22) eines Moduls niedriger Priorität mit dem Eingang (21) eines Moduls hoher Priorität verbunden ist, um eine Lastrotationsschleife einer Gruppe von Modulen (22, 23, 24) zu bilden.

8. Regelanordnung nach einem der Ansprüche 3 una 4, dadurch gekennzeichnet, daß die Steuermittel (31)
- ein an das Regelmodul (11) angeschlossenes und mit den Steuersignalen zum Lastabwurf (16), zur Lastwiederaufnahme (17) sowie zur Lastrotation (18) beaufschlagtes Sendemodul (28),
- ein an das Sendemodul angeschlossenes Kommunikationssystem (29),
- sowie an das Kommunikationssystem (29) bzw. ein zugeordnetes Schaltorgan angeschlossene Empfangsmodule (30a, 30b, 30c) umfassen.

9. Regelanordnung nach irgendeinem der Ansprüche 1 bis 8, dadurch gekennzeichnet, daß sie Decodiermittel (27) umfaßt, die an das Verteilernetz (1) sowie die Lastabwurf- und - wiederaufnahmemittel angeschlossen sind und mit Tarifinformationen zu der vom Netz gelieferten elektrischen Energie beaufschlagt werden, wobei die Informationen von den Lastabwurf- und -wiederaufnahmemitteln zur Änderung der Schwellwerte (I1, I2) verwendet werden.

10. Regelanordnung nach irgendeinem der Ansprüche 1 bis 9, dadurch gekennzeichnet, daß sie an die Lastabwurf- und -wiederaufnahmemittel angeschlossene Temperaturmeßmittel (26) umfaßt.

## Claims

1. An electrical power management device comprising :
- measuring means (9) for measuring the current flowing in a main circuit (3) of an installation connected to a distribution system (1) via a circuit breaker (2), the main circuit (3) supplying priority circuits (4, 14a, 14b) and a plurality of non-priority circuits (5, 15a, 15b, 15c),
- load disconnection and reconnection means (10), connected to the measuring means, comprising means (8, 13a, 13b, 13c) for interrupting the current in the non-priority circuits,
a device characterized in that the load disconnection and reconnection means comprise:
- means (11, 12a-12g, 13a-13c, 18, 30a-30c) for disconnecting the current simultaneously in all the non-priority circuits when the value of the measured current (I) exceeds a first preset threshold (I1),
- means (11, 12a-12g, 15a-15c, 18, 30a-30c) for sequentially reconnecting the current in the non-priority circuits so long as the value of the measured current (I) is lower than a second preset threshold (I2).

2. The management device according to claim 1 characterized in that the load disconnection and reconnection means comprise means (11, 12a-12g, 13a-13c, 18, 30a-30c) for re-establishing the current in non-priority circuits, during a preset time, when the value of the measured current (I) is comprised between the first and second preset thresholds (I1, I2), the current being re-established, by rotation within at least one group (23, 24, 25) of non-priority circuits.

3. The management device according to one of the claims 1 and 2 characterized in that the load disconnection and reconnection means comprise :
- a management module (11) connected to the measuring means (9),
- actuators (13a, 13b, 13c) associated to each non-priority circuit and respectively connected between the main circuit (3) and the associated non-priority circuit (15a, 15b, 15c),
- control means (31) connected to the management module and to the actuators.

4. The management device according to claim 3 characterized in that the management module (11) transmits to the control means (31, 12a-12g) load disconnection order signals (16) when the value of the measured current (I) is greater than the first threshold (I1), load reconnection order signals (17) when the value of the measured current (I) is lower than the second threshold (12), and rotation order signals (18) when the value of the measured current (I) is comprised between the first and second thresholds (I1, I2).

5. The management device according to one of the claims 3 and 4 characterized in that the control means (31) comprise control modules (12a-12c) respectively connected to the management module (11) and to an associated actuator (13a-13c).

6. The management device according to claim 5 characterized in that each control module (12a-12g) comprises a reconnection priority input (19) connected to a module of immediately higher priority to receive information representative of the reconnection state of the previous module and a reconnection priority output (20) connected to the reconnection priority input of a module of immediately lower priority and supplying information representative of its own reconnection state.

7. The management device according to one of the claims 5 and 6 characterized in that control modules comprise a rotation input (21) connected to a module of immediately higher priority to receive information representative of the rotation state of the previous module and a rotation output (22) connected to the rotation input of a module of immediately lower priority and supplying information representative of its own rotation state, the rotation output (22) of a low priority module being connected to the input (21) of a high priority module to form a rotation loop of a group of modules (23, 24, 25).

8. The management device according to one of the claims 3 and 4 characterized in that the control means (31) comprise :
- a transmitter module (28) connected to the management module (11) and receiving the load disconnection order signals (16), reconnection order signals (17) and rotation order signals (18),
- a communication system (29) connected to the transmitter module,
- receiver modules (30a, 30b, 30c) respectively connected to the communication system (29) and to an associated actuator.

9. The management device according to any one of the claims 1 to 8 characterized in that it comprises decoding means (27) connected to the distribution system (1) and to the load disconnection and reconnection means and receiving information concerning the billing rate of the power supplied by the electrical power system, the information being used in the load disconnection and reconnection means to modify the preset thresholds (I1, I2).

10. The management device according to any one of the claims 1 to 9 characterized in that it comprises temperature measuring means (26) connected to the load disconnection and reconnection means.
